Europäisches Patentamt

European Patent Office

Office européen des brevets

(19)

(11) **EP 1 119 734 B1**

## (12) FASCICULE DE BREVET EUROPEEN

(45) Date de publication et mention
de la délivrance du brevet:
**08.05.2002 Bulletin 2002/19**

(51) Int Cl.[7]: **F27D 11/10**, C21C 5/52,
H05B 7/09

(21) Numéro de dépôt: **99950581.1**

(22) Date de dépôt: **30.09.1999**

(86) Numéro de dépôt international:
**PCT/EP99/07255**

(87) Numéro de publication internationale:
**WO 00/20815 (13.04.2000 Gazette 2000/15)**

(54) **PROCEDE POUR L'ENFOURNEMENT DE FINES OU DE GRANULES DANS UN FOUR A ARC**

VERFAHREN ZUM EINSPEISEN VON FEINKOHLEN ODER PULVERMATERIAL IN EINEM
LICHTBOGENOFEN

METHOD FOR FEEDING FINES OR GRANULES INTO A LIGHT-ARC FURNACE

(84) Etats contractants désignés:
**AT DE FI GB IT**
Etats d'extension désignés:
**AL LT LV MK RO SI**

(30) Priorité: **06.10.1998 LU 90293**

(43) Date de publication de la demande:
**01.08.2001 Bulletin 2001/31**

(73) Titulaire: **PAUL WURTH S.A.**
**1122 Luxembourg (LU)**

(72) Inventeurs:
• **ROTH, Jean-Luc**
**F-57100 Thionville (FR)**

• **DEVILLET, Serge**
**L-9142 Buerden (LU)**
• **LONARDI, Emile**
**L-4945 Bascharage (LU)**

(74) Mandataire: **Schmitt, Armand et al**
**Office Ernest T. Freylinger S.A.**
**234, route d'Arlon,**
**B.P. 48**
**8001 Strassen (LU)**

(56) Documents cités:
**EP-A- 0 557 020**      **DE-A- 3 621 323**
**GB-A- 811 803**      **GB-A- 1 435 184**
**US-A- 3 940 551**      **US-A- 4 079 185**
**US-A- 4 146 390**

## Description

La présente invention concerne de façon générale un procédé pour l'enfournement de fines ou de granulés dans un four à arc. Elle concerne plus particulièrement l'enfournement sous forme de fines ou de granulés d'un préréduit de minerai de fer dans un four à arc utilisé pour la production d'aciers ou de ferro-alliages.

### Etat de la technique

En ce qui concerne les fours à arc produisant de l'acier à partir de ferraille, il est connu de remplacer une partie de la charge de ferraille par un préréduit de minerais de fer. A cette fin, le préréduit est enfourné sous forme de boulettes ou de briquettes, qu'on laisse simplement tomber par une ouverture dans la voûte du four dans le bain en fusion. Ces boulettes ou briquettes traversent le laitier recouvrant le bain d'acier et fondent sans problème au contact de l'acier liquide.

Comme il apparaît aujourd'hui des procédés produisant du préréduit sous forme de fines (granulométrie généralement inférieure à 3 mm) ou granulés (granulométrie généralement entre 3 mm et 20 mm), et que la fabrication de boulettes ou briquettes est de toute façon accompagnée d'une formation de fines, il serait intéressant de pouvoir enfourner le préréduit directement sous forme de fines ou de granulés. Or, un tel enfournement de fines ou de granulés pose des problèmes majeurs. En premier lieu, une partie importante de fines est entraînée par les fumées lors de leur déversement dans le four à arc. Ensuite, des fines ou des granulés déversés dans le four à arc ont tendance à flotter sur une couche de laitier qui recouvre la surface du bain métallique, au lieu de venir au contact avec le bain métallique pour y passer en fusion. Ceci n'entraîne pas seulement une mauvaise fusion du préréduit, mais aussi une perturbation de la formation de laitier moussant et une réduction de l'efficacité du ou des arcs.

Afin de faciliter l'introduction de fines dans le bain métallique, il a été proposé d'utiliser une lance de soufflage pour injecter les fines en suspension dans un gaz porteur dans le bain en fusion, et ceci à proximité immédiate du point d'impact d'un arc libre (ou arc plasma) sur le bain métallique. On compte ainsi profiter d'un courant descendant dans cette région du bain métallique pour entraîner rapidement les fines dans le bain en fusion. Cependant, le débit de fines qui peut être injecté de cette façon est peu important (de l'ordre de 100 kg/min.), le soufflage risque d'affecter la stabilité de l'arc plasma et l'introduction de granulés n'est guère possible par ce procédé.

Afin de remédier aux inconvénients mentionnés plus haut, il a aussi été proposé d'utiliser des vis sans fin pour pousser les fines dans le laitier ou directement dans le bain. Une telle solution nécessite cependant des investissements importants et pose des problèmes du point de vue encombrement sur le four.

De la demande de brevet CH-A-653 201 il est connu d'injecter des fines de préréduit en suspension dans un gaz porteur à travers une électrode creuse dans un four à arc. Il paraît que cette solution n'a été appliquée jusqu'à présent que sur des fours de taille réduite, ou en tout cas pour enfourner des fines avec des débits et des granulométries faibles. Il paraît aussi que les électrodes utilisées pour la mise en oeuvre de ce procédé s'usent très vite, cette usure étant notamment due à une intense abrasion mécanique causée par le flux pneumatique dans l'électrode creuse. Il faut en outre noter que le soufflage des fines à travers l'électrode n'est pas sans influence sur l'arc plasma formé par l'électrode, ce qui impose certaines contraintes en ce qui concerne les paramètres de soufflage.

La demande de brevet DE-A-196 12 383 propose de limiter la longueur de l'arc électrique dans un four à arc plasma utilisé pour la production d'acier, en introduisant du charbon ou de la chaux à travers une électrode creuse dans le four. Elle propose aussi d'ajouter accessoirement des poussières problématiques, provenant par exemple d'installations de dépoussiérage industrielles. Les moyens utilisés pour l'alimentation de l'électrode creuse avec ces additifs comprennent notamment des convoyeurs à courroie et à vis sans fin.

De la demande de brevet DE-A-25 36 083 il est connu d'utiliser une unité d'électrode creuse de grand diamètre cuite in situ (c'est-à-dire une électrode du type Sôderberg), pour extraire à l'aide d'une turbine les fumées d'un four à arc, qui est utilisé pour la production de ferro-alliages par réduction de minerais bruts fins ou granulés. On propose dans cette demande de faire tomber la charge, consistant de minerai de fer, de pellets, de préréduit de minerai de fer, de charbon et de dolomie, à travers l'électrode creuse par laquelle on extrait en même temps les fumées du four à arc. Cette charge est réchauffée, dépoussiérée et partiellement préréduite dans le contre-courant des fumées,

Du document US-A-4,146,390 on connaît un procédé dans lequel des fines ou granulés de minerai de fer et de carbone sont alimentés dans un four à arc en chute libre à travers une électrode creuse en graphite.

Du document US-A-3,940,551 on connaît un procédé dans lequel des fines ou granulés de minerai de fer sont alimentés dans un four à arc en chute libre à travers un tube traversant une électrode creuse en graphite. Un gaz est injecté dans l'espace annulaire entre le tube et la paroi interne de l'électrode pour confiner le courant de matière à la sortie du tube.

### Problème à la base de l'invention

L'objet de la présente invention est de proposer un procédé pour l'enfournement rationnel d'importantes quantités de fines ou de granulés dans un four à arc. Conformément à l'invention, ce problème est résolu par un procédé selon la première revendication.

*Description générale de l'invention*

La présente invention utilise pour l'enfournement des fines ou des granulés, respectivement un mélange des deux, une unité d'électrode creuse munie d'un canal d'alimentation central. Selon un aspect important de la présente invention, les fines ou les granulés sont alimentés dans ce canal d'alimentation de façon à maintenir dans ce celui-ci une colonne de matière. En d'autres termes, l'unité d'électrode est utilisée comme "trémie d'alimentation" qui se décharge par gravité à proximité immédiate du bain métallique.

Le poids propre de la colonne de matière pousse son extrémité inférieure, constituée de fines ou de granulés entre-temps agglomérés sous l'effet de la chaleur, dans le bain métallique. Réchauffée d'abord à la sortie de ce canal au centre du ou des arcs électriques qui l'entourent, puis immergée dans le bain du métal en fusion, cette extrémité inférieure de la colonne de matière passe rapidement en fusion. Au fur et à mesure que son extrémité inférieure passe en fusion, la colonne de matière descend dans le canal d'alimentation de l'unité d'électrode. Cette descente est probablement facilitée par une fusion superficielle de la colonne de matière, provoquée notamment par des courants qui s'établissent dans la colonne de matière.

Il sera particulièrement apprécié que le procédé selon l'invention permet un enfournement rationnel d'importantes quantités d'un préréduit de minerai de fer sous forme de fines ou de granulés dans un four à arc utilisé pour la production d'acier ou de ferro-alliages. En effet, le procédé n'affecte ni la formation d'une couche de laitier moussant, ni les caractéristiques de l'arc électrique. Il assure par contre un préchauffage efficace du préréduit avant son introduction dans le bain métallique et une surface de fusion accrue dans le bain métallique même.

De préférence on maintient dans le canal d'alimentation une colonne de matière dont la hauteur est suffisante pour obtenir une pénétration profonde de l'extrémité inférieure de la colonne de matière dans le bain métallique. Une telle pénétration est par exemple garantie lorsque la colonne de matière a une hauteur sensiblement égale à:

$$h_b*(\rho_{liq}/\rho_{sol})$$

où:

$h_b$ = hauteur du bain liquide en-dessous de l'unité d'électrode;

$\rho_{liq}$ = poids spécifique moyen de la phase liquide dans le bain métallique en-dessous de l'unité d'électrode;

$\rho_{sol}$ = poids spécifique moyen de la phase solide dans la colonne

La vitesse de descente de la colonne de matière dans l'électrode creuse sera normalement comprise entre 0,5 et 5 m/min.. Le canal d'alimentation présente sur toute sa longueur une section de passage de diamètre supérieur à 100 mm et de préférence au moins égale à 0,25 fois le diamètre extérieur de l'électrode. Pour des raisons de stabilité de l'unité d'électrode, le diamètre de la section de passage ne sera généralement pas supérieur à 0,50 fois le diamètre de l'électrode.

On peut utiliser une électrode en graphite massif, munie d'un canal d'alimentation qui présente de préférence une section de passage d'un diamètre de 150 à 300 mm. Dans ce cas on peut travailler avec un arc du type plasma, appelé encore arc libre, dans un four à arc alimenté simultanément avec du préréduit de minerai de fer sous forme de fines ou de granulés et de la ferraille.

On peut cependant aussi cuire une électrode creuse in situ autour du canal d'alimentation. La cuisson d'une telle électrode creuse comprend alors l'injection d'une pâte d'électrode dans un espace annulaire, délimité entre une enveloppe métallique extérieure et une enveloppe métallique intérieure. La pâte se solidifie dans cet espace annulaire pour former une électrode à section annulaire cuite in situ. Une telle électrode présente généralement une section de passage d'un diamètre supérieur à 300 mm. Elle est normalement utilisée pour produire des arcs électriques qui sont en majeure partie immergés dans une couche de laitier moussant recouvrant le bain métallique.

*Description à l'aide des figures*

D'autres particularités et caractéristiques de l'invention ressortiront de la description détaillée d'un mode de réalisation avantageux, présenté ci-dessous, à titre d'illustration, en se référant au dessin annexé, qui montre:

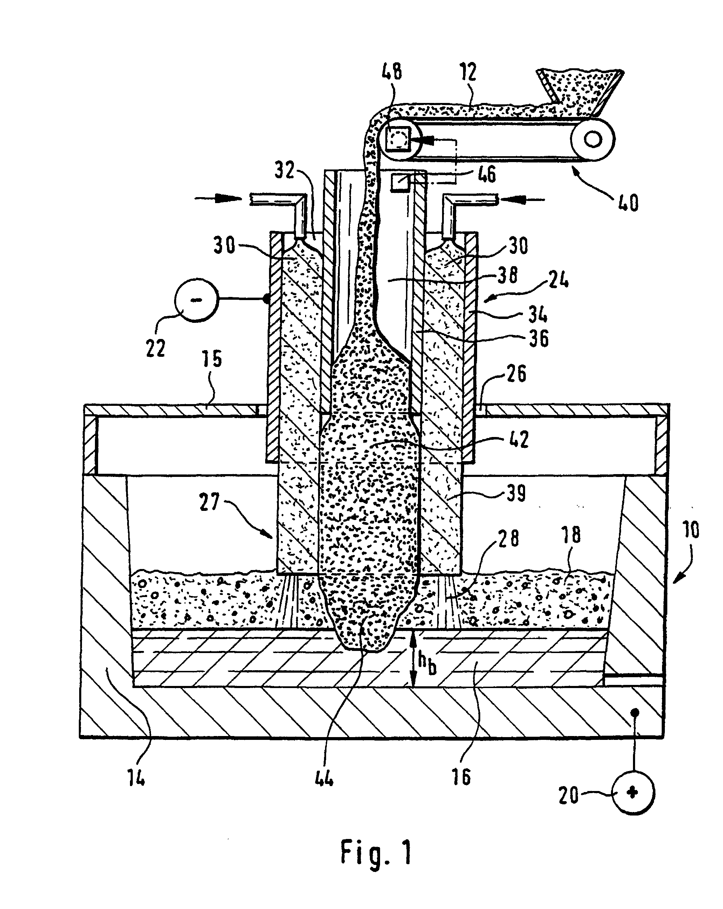

Fig.1: une coupe très schématique à travers une installation pour la mise en oeuvre du procédé selon l'invention.

La Figure 1 montre un four électrique à courant continu 10 utilisé pour la production d'aciers ou de ferro-alliages, pendant l'enfournement sous forme de fines ou de granulés 12, selon le procédé de la présente invention, d'un préréduit de minerai de fer. Du four 10 on voit en particulier la cuve 14 et le couvercle 15. La référence 16 repère un bain métallique (c'est-à-dire un métal fondu en phase liquide) dans la cuve 14. Ce bain métallique 16 est recouvert d'une couche de laitier moussant 18.

La cuve 14 (respectivement une électrode de sole non montrée) est raccordée à un pôle positif 20 d'une alimentation électrique (non montrée). Un pôle négatif 22 de cette alimentation électrique est raccordé à une unité d'électrode creuse, qui est repérée globalement par la référence 24. Cette unité d'électrode creuse 24 passe verticalement à travers une ouverture 26 dans le couvercle 15, de façon à ce que son extrémité inférieure 27 se trouve dans la couche de laitier moussant 18, à proximité du bain métallique 16. Des arcs électriques 28 s'établissent alors dans la couche de laitier moussant 18, entre l'extrémité annulaire inférieure 27 de l'unité d'électrode 24, qui se trouve à un potentiel négatif, et le bain métallique 16, qui se trouve à un potentiel positif.

L'unité d'électrode creuse 24 représentée est une unité d'électrode du type Sôderberg. On obtient cette électrode en injectant, à l'extrémité supérieure de l'unité d'électrode 24, une pâte d'électrode autodurcissante 30 dans un espace annulaire 32, qui est délimité entre une enveloppe métallique extérieure 34 et une enveloppe métallique intérieure 36. Cette pâte d'électrode 30 se solidifie dans cet espace annulaire 32 sous l'effet de la chaleur, de sorte que l'on cuit in situ une électrode creuse 39 en graphite, munie d'un canal central 38 de diamètre assez important. Au fur et à mesure que cette électrode en graphite 39 se consomme à son extrémité inférieure 27, on la reconstitue à son extrémité supérieure et on réajuste sa hauteur au-dessus du bain métallique 16. Il sera encore noté que le canal 38 est délimité dans sa partie supérieure par l'enveloppe métallique intérieure 36 et dans sa partie inférieure par la pâte d'électrode solidifiée.

Dans l'installation représentée, les fines ou les granulés 12 sont déversées par un convoyeur 40 dans le canal central 38 de l'unité d'électrode 24. Selon un aspect important de la présente invention, on ajuste le débit de fines ou de granulés 12 déversés dans le canal d'alimentation 38 de façon à maintenir dans ce canal 38 une colonne de matière 42 dont la hauteur est suffisante pour faire pénétrer son extrémité inférieure 44, dans laquelle les fines ou les granulés se sont agglomérés sous l'effet de la chaleur, dans le bain métallique 16. Au fur et à mesure que son extrémité inférieure 44 passe en fusion, la colonne de matière 42 descend dans le canal d'alimentation 38 de l'unité d'électrode. Cette descente est par ailleurs facilitée par une fusion superficielle de la colonne de matière 42, notamment suite à des courants qui s'établissent dans la colonne de matière.

L'installation est munie d'une sonde 46 qui détecte le niveau supérieur de la colonne de matière 42 dans le canal d'alimentation 38. Cette sonde 46 est reliée à un régulateur 48 qui règle le débit du convoyeur 40, de façon à maintenir un niveau prescrit de matière dans le canal d'alimentation 38. Il sera apprécié qu'en agissant sur le niveau de matière 42 dans le canal d'alimentation 38 on sait modifier la charge de fines ou de granulés qui passe en fusion dans le bain liquide.

**Exemple 1 :**

Pour un four d'une capacité de 5 t, ayant un diamètre de bain de 2,5 m, on utilise une électrode avec un canal d'alimentation d'un diamètre de 30 cm pour introduire 6 t/h de préréduit sous forme de fines ou de granulés. Ceci correspond à une vitesse de descente de la colonne de matière 42 d'environ 1 m/min.

**Exemple 2:**

Pour un four d'une capacité de 50 t, ayant un diamètre de bain de 4,5 m, on utilise une électrode avec un canal d'alimentation d'un diamètre de 50 cm pour introduire 60 t/h de préréduit sous forme de fines ou de granulés. Ceci correspond à une vitesse de descente de la colonne de matière 42 d'environ 1 m/min.

## Revendications

1. Procédé pour l'enfournement de fines ou de granulés dans un four à arc (10), dans lequel on utilise une unité d'électrode creuse (24) munie d'un canal d'alimentation (38) pour l'enfournement des fines ou des granulés (12), **caractérisé en ce que** l'on alimente lesdits fines ou granulés (12) dans ledit canal d'alimentation (38) de façon à maintenir dans celui-ci une colonne de matière (42) dont le poids propre pousse son extrémité inférieure, constituée de fines ou de granulés agglomérés sous l'effet de la chaleur, dans le bain métallique.

2. Procédé selon la revendication 1, **caractérisé en ce que** lesdits fines ou granulés (12) comprennent comme constituant principal un préréduit de minerai de fer.

3. Procédé selon la revendication 1 ou 2, **caractérisé en ce que** l'on maintient dans ledit canal d'alimentation (38) une colonne de matière (42) dont la hauteur est sensiblement égale à:

$$h_b{}^*(\rho_{liq}/\rho_{sol})$$

où:

$h_b$ = hauteur du bain métallique (16) en-dessous de l'unité d'électrode (24);

$\rho_{liq}$ = poids spécifique moyen de la phase liquide dans le bain métallique (16) en-dessous de l'unité d'électrode (24);

$\rho_{sol}$ = poids spécifique moyen de la phase solide dans la colonne de matière (42).

**4.** Procédé selon l'une quelconque des revendications 1 à 3, **caractérisé en ce que** la vitesse de descente de la colonne de matière (42) dans l'électrode creuse (24) est de 0,5 à 5 m/min.

**5.** Procédé selon l'une quelconque des revendications 1 à 4, **caractérisé en ce que** ledit canal d'alimentation (38) présente sur toute sa longueur une section de passage de diamètre supérieur à 100 mm.

**6.** Procédé selon la revendication 5, **caractérisé en ce que** le diamètre de la section de passage est compris entre 0,25 à 0,50 fois le diamètre extérieur de l'électrode.

**7.** Procédé selon l'une quelconque des revendications 1 à 6, **caractérisé en ce que** l'électrode creuse est une électrode en graphite massif, munie d'un canal d'alimentation qui présente une section de passage d'un diamètre de 150 à 300 mm.

**8.** Procédé selon l'une quelconque des revendications 1 à 6, **caractérisé en ce qu'**on cuit une électrode creuse in situ autour dudit canal d'alimentation (38).

**9.** Procédé selon la revendication 8, **caractérisé en ce que** la cuisson de l'électrode creuse comprend:

l'injection d'une pâte d'électrode (30) dans un espace annulaire (32), délimité entre une enveloppe métallique extérieure (34) et une enveloppe métallique intérieure (36);

ladite pâte (30) se solidifiant dans ledit espace annulaire (32) pour former une électrode à section annulaire (39) cuite in situ.

**10.** Procédé selon la revendication 8 ou 9, **caractérisé en ce que** le canal d'alimentation formé dans ladite électrode (39) cuite in situ présente une section de passage d'un diamètre supérieur à 300 mm.

**11.** Procédé selon la revendication 8, 9 ou 10, **caractérisé en ce que** ladite électrode cuite in situ produit des arcs électriques (28) qui sont en majeure partie immergés dans une couche de laitier moussant (18) recouvrant le bain métallique (16).

**Patentansprüche**

**1.** Verfahren zur Beschickung eines Lichtbogenofens (10) mit Feinanteilen oder Granulaten, bei dem eine Hohlelektrodeneinheit (24) mit einem zentralen Zuführungskanal (38) zur Beschickung mit Feinanteilen oder Granulaten (12) verwendet wird, **dadurch gekennzeichnet, dass** die Feinanteile oder Granulate (12) derart in den zentralen Zuführungskanal (38) eingetragen werden, dass darin eine Materialsäule (42) aufrechterhalten bleibt, deren Eigengewicht das untere Ende, bestehend aus unter Hitzeeinwirkung zusammengebackenen Feinanteilen oder Granulaten in das Metallbad eindrückt.

**2.** Verfahren nach Anspruch 1, **dadurch gekennzeichnet, dass** die besagten Feinanteile oder Granulate (12) überwiegend aus einem vorreduzierten Eisenerz bestehen.

**3.** Verfahren nach Anspruch 1 oder 2, **dadurch gekennzeichnet, dass** im Zuführungskanal (38) eine Materialsäule (42) aufrechterhalten wird, deren Höhe annähernd

$$h_b * (\rho_{fl\ddot{u}s} / \rho_{fest})$$

entspricht, wobei
$h_b$ = Höhe des Metallbads (16) unterhalb der Elektrodeneinheit (24),
$\rho_{fl\ddot{u}s}$ = durchschnittliches Raumgewicht der Flüssigphase im Metallbad (16) unterhalb der Elektrodeneinheit (24),
$\rho_{fest}$ = durchschnittliches Raumgewicht der Festphase in der Materialsäule (42).

**4.** Verfahren nach einem beliebigen der Ansprüche 1 bis 3, **dadurch gekennzeichnet, dass** die Materialsäule (42) mit einer Geschwindigkeit von 0,5 - 5 m/min in der Hohlelektrode (24) hinabrutscht.

**5.** Verfahren nach einem beliebigen der Ansprüche 1 bis 4, **dadurch gekennzeichnet, dass** der Durchmesser des Durchgangsquerschnittes auf der gesamten Länge des besagten Zuführungskanals (38) größer als 100 mm ist.

**6.** Verfahren nach Anspruch 5, **dadurch gekennzeichnet, dass** der Durchmesser des Durchgangsquerschnittes dem 0,25-fachen bis 0,50-fachen des Elektroden-Außendurchmessers entspricht.

**7.** Verfahren nach einem beliebigen der Ansprüche 1 bis 6, **dadurch gekennzeichnet, dass** die Hohlelektrode eine Elektrode aus massivem Graphit mit einem einen vorzugsweise zwischen 150 und 300 mm liegenden Durchmesser des Durchgangsquerschnitts aufweisenden Zuführungskanal ist.

**8.** Verfahren nach einem beliebigen der Ansprüche 1 bis 6, **dadurch gekennzeichnet, dass** eine Hohlelektrode vor Ort um den besagten Zuführungskanal (38) gebrannt wird.

**9.** Verfahren nach Anspruch 8, **dadurch gekennzeichnet, dass** das Brennen der Hohlelektroden, folgende Schritte umfasst.

das Einspritzen einer Elektrodenpaste (30) in eine zwischen einem metallischen Außenmantel (34) und einem metallischen Innenmantel (36) ausgebildete ringförmige Kammer (32) sowie

das Erstarren der besagten Paste (30) in der besagten ringförmigen Kammer (32) zu einer vor Ort gebrannten Elektrode ringförmigen Querschnitts (39).

10. Verfahren nach Anspruch 8 oder 9, **dadurch gekennzeichnet, dass** in dem durch die besagte, vor Ort gebrannte Elektrode (30) gebildeten Zuführungskanal der Durchmesser des Durchgangsquerschnitts 300 mm übersteigt.

11. Verfahren nach Anspruch 8, 9 oder 10, **dadurch gekennzeichnet, dass** die besagte, vor Ort gebrannte Elektrode elektrische, zum größten Teil in eine Schaumschlackenschicht (18) auf der Oberfläche des Metallbads (16) eingetauchten Lichtbögen erzeugt.

## Claims

1. Method for charging an arc furnace (10) with fines or granules which uses a hollow electrode unit (24) provided with a feed channel (38) for said fines or granules (12),
   **characterised in that**
   said fines or granules (12) are fed into said feed channel (38) in such a way as to maintain in the latter a column of material (42) whose own weight pushes its lower end, consisting of fines or granules agglomerated under the effect of heat, into the metallic bath.

2. Method according to Claim 1, **characterised in that** said fines or granules (12) have as a principal constituent pre-reduced iron ore.

3. Method according to Claim 1 or 2, **characterised in that** a column of material (42) is maintained in said feed channel (38), said column having a height which is substantially equal to:

$$h_b {}^*(\rho_{liq}/\rho_{sol})$$

where:

   $h_b$ = depth of the liquid bath (16) below the electrode unit (24);
   $\rho_{liq}$ = mean specific gravity of the liquid phase in the metallic bath (16) below the electrode unit (24);
   $\rho_{sol}$ = mean specific gravity of the solid phase in the column of material (42).

4. Method according to any one of Claims 1 to 3, **characterised in that** the rate of descent of the column of material (42) in the hollow electrode (24) is from 0.5 to 5 m/min.

5. Method according to any one of Claims 1 to 4, **characterised in that** said feed channel (38) has, over its whole length, a cross-section of flow with a diameter greater than 100 mm.

6. Method according to Claim 5, **characterised in that** the diameter of the cross-section of flow lies between 0.25 and 0.50 times the outer diameter of the electrode.

7. Method according to any one of Claims 1 to 6, **characterised in that** the hollow electrode is a graphite electrode, provided with a feed channel having a cross-section of flow with a diameter from 150 to 300 mm.

8. Method according to any one of Claims 1 to 6, **characterised in that** a hollow electrode is baked in situ around said feed channel (38).

9. Method according to Claim 8, **characterised in that** the baking of the hollow electrode comprises:

   the injection of an electrode paste (30) into an annular space (32) defined between an outer metallic jacket (34) and an inner metallic jacket (36);

   said paste (30) becoming solidified in said annular space (32) to form an electrode with an annular cross-section (39) baked in situ.

10. Method according to Claim 8 or 9, **characterised in that** the feed channel formed in said electrode (39) baked in situ has a cross-section of flow with a diameter greater than 300 mm.

11. Method according to Claim 8, 9 or 10, **characterised in that** said electrode baked in situ produces electric arcs (28) which are immersed to a large extent in a layer of foaming slag (18) covering the metallic bath (16).

Fig. 1